# EUROPEAN PATENT APPLICATION

(11) **EP 4 809 822 A1**
(43) Date of publication of application: **23.09.2026**
(21) Application number: 25211575.3
(22) Date of filing: 28.10.2025
(51) Int. Cl.: A01K 1/015

(54) **PET PEE PAD**

(30) Priority: 20.03.2025 CN 202520496793 U
(71) Applicant: Jiangsu Zhongheng Pet Articles Joint-Stock Co., Ltd., Yancheng, Jiangsu 224000 (CN)
(72) Inventor: QIU, Bin, Yancheng, Jiangsu, 224000 (CN)
(74) Representative: Miller, Ronald Anthony

(57) **Abstract**

The present device relates to the field of pet supplies, and in particular, to a pet pee pad. The pet pee pad provided in the present invention includes an impermeable layer, an absorbent layer connected to a side of the impermeable layer, and an intercepting assembly connected to a side of the absorbent layer away from the impermeable layer. By providing a plurality of intercepting members on an upper surface of the absorbent layer, the intercepting members may intercept urine, reducing the spread of the urine and preventing the urine from flowing onto the ground, thereby reducing the difficulty of cleaning.

## Description

### TECHNICAL FIELD

The present invention relates to the field of pet supplies, and in particular, to a pet pee pad.

### BACKGROUND

With the development of science and technology and the progress of the era, people's living standards have improved. As more and more people are often apart from family and friends due to work and study, they prefer to keep pets for companionship. However, managing the excretion of some pets is very challenging. When there is excessive urine after a pet pees, the urine may flow out from the edge of a pee pad onto the ground, increasing the difficulty of cleaning.

### SUMMARY

To solve the technical problem that when there is excessive urine from a pet, the urine may flow out from the edge of a pee pad onto the ground, increasing the difficulty of cleaning, an objective of the present invention is to provide a pet pee pad.

To achieve the above objective, an embodiment of the present invention provides a pet pee pad. The pet pee pad includes:
an impermeable layer;
an absorbent layer, where the absorbent layer is connected to a side of the impermeable layer; and
an intercepting assembly, where the intercepting assembly is connected to a side of the absorbent layer away from the impermeable layer.

In the above technical solution, the intercepting assembly includes:
a plurality of intercepting members, where the plurality of intercepting members are connected to the side of the absorbent layer away from the impermeable layer, a head end and a tail end of each of the plurality of intercepting members are connected, and the plurality of intercepting members are concentrically arranged or eccentrically arranged.

Additional aspects and advantages of the present invention will become apparent in the following description or will be understood through the practice of the present invention.

### BRIEF DESCRIPTION OF THE DRAWINGS

The above and/or additional aspects and advantages of the present invention will become apparent and readily comprehensible from the description of embodiments in reference with the following drawings, where
FIG. 1 is a top schematic structural diagram according to the present invention.
FIG. 2 is a front sectional schematic structural diagram according to the present invention.

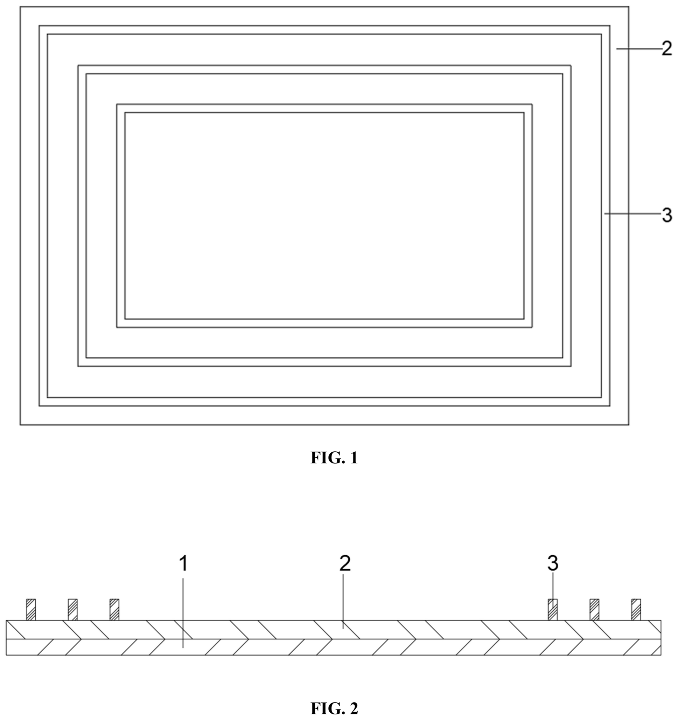

Reference signs in FIG. 1 and FIG. 2 respectively refer to:
1. impermeable layer; 2. absorbent layer; and 3. intercepting member.

### DETAILED DESCRIPTION OF THE EMBODIMENTS

To understand the above objectives, features, and advantages of the present invention more clearly, the present invention is further described in detail below with reference to the drawings and specific implementations. It should be noted that the embodiments of the present invention and features of the embodiments may be combined with each other in case of no conflict.

Many specific details are set forth in the following description to facilitate a full understanding of the present invention. However, the present invention can also be implemented in other ways different from those described herein. Therefore, the protection scope of the present invention is not limited by the specific embodiments disclosed below.

Some embodiments of the pet pee pad according to the present invention are described below with reference to FIG. 1 and FIG. 2.

As shown in FIG. 1 and FIG. 2, an embodiment of the present invention provides a pet pee pad, including an impermeable layer 1, an absorbent layer 2 fixedly connected to an upper surface of the impermeable layer 1, and an intercepting assembly fixedly connected to an upper surface of the absorbent layer 2.

The intercepting assembly includes a plurality of intercepting members 3. For example, three intercepting members 3 are provided. The three intercepting members 3 are fixedly connected to the upper surface of the absorbent layer 2. A head end and a tail end of each of the three intercepting members 3 are connected to form an enclosed structure. The three intercepting members 3 have different sizes. The three intercepting members 3 include a first intercepting member 3, a second intercepting member 3, and a third intercepting member 3. The first intercepting member 3 is located inside the second intercepting member 3. A gap is formed between an outer wall of the first intercepting member 3 and an inner wall of the second intercepting member 3. The second intercepting member 3 is located inside the third intercepting member 3. A gap is formed between an outer wall of the second intercepting member 3 and an inner wall of the third intercepting member 3. A center of the first intercepting member 3, a center of the second intercepting member 3, and a center of the third intercepting member 3 are located at the same position or at different positions.

When a pet pees on the upper surface of the absorbent layer 2, the pet's urine first flows inside the first intercepting member 3. Subsequently, as the urine volume increases, the urine is partially absorbed by the absorbent layer 2 and partially comes into contact with the first intercepting member 3. The first intercepting member 3 is made of the same material as that of the absorbent layer 2, and the first intercepting member 3 can absorb the urine and also intercept the urine, reducing the spread of the urine to a surrounding area. When the first intercepting member 3 cannot obstruct the spread of the urine, the urine flows to the second intercepting member 3. The second intercepting member 3 can absorb the urine and also intercept the urine. In this way, the urine is absorbed and intercepted step by step, preventing the urine from spreading onto the ground and thereby reducing the difficulty of cleaning for a user.

Furthermore, the number of the intercepting members 3 is not limited to three. The corresponding number of the intercepting members 3 can be selected based on the actual size and normal urine volume of the pet. This allows the entire pee pad to be designed with a corresponding number of intercepting members 3 for different pets.

It should be noted that the intercepting members 3 may be circular, oval, rectangular, or irregular in shape, as long as the intercepting members 3 can each form an enclosed structure.

It should be noted that the impermeable layer 1 is made of a polyethylene (PE) cast film, and urine may be completely absorbed in the absorbent layer 2. The PE cast film plays a role in preventing leakage of the urine. The absorbent layer 2 is provided on the upper surface of the impermeable layer 1, and the absorbent layer 2 includes a polypropylene (PP) non-woven fabric, a first tissue paper layer, a wood pulp layer, and a second tissue paper layer in sequence. Thus, when urine enters the absorbent layer 2, the first and second tissue paper layers and the wood pulp layer can quickly absorb the urine, further reducing the spread of the urine.

The present invention has the following advantages.

By providing the plurality of intercepting members 3 on the upper surface of the absorbent layer 2, the intercepting members 3 may intercept urine, reducing the spread of the urine and preventing the urine from flowing onto the ground, thereby reducing the difficulty of cleaning.

In the present invention, the terms such as "provided", "connected to", "connected", and "fixed" should be comprehended in a broad sense. For example, "connected" may be comprehended as fixedly connected, detachably connected, or integrally connected, and "connected to" may be directly connected to or indirectly connected to through an intermediary. Those of ordinary skill in the art may understand the specific meanings of the above terms in the present invention based on specific situations.

In the description of the present invention, it should be understood that orientation or position relationships indicated by terms such as "inside" and "outside" are orientation or position relationships shown in the drawings, and these terms are just used to facilitate description of the present invention and simplify the description, but not to indicate or imply that the mentioned apparatus or elements must have a specific orientation and must be constructed and operated in a specific orientation, and thus, these terms cannot be understood as a limitation to the present invention.

In the description of this specification, the description with reference to the terms such as "one embodiment", "some embodiments", and "a specific embodiment" means that the specific features, structures, materials, or characteristics described with reference to the embodiment or example are included in at least one embodiment or example of the present invention. In this specification, the schematic descriptions of the above terms do not necessarily refer to the same embodiment or example. Moreover, the specific features, structures, materials, or characteristics described may be combined in any suitable manner in any one or more embodiments or examples.

The above are merely preferred embodiments of the present invention, and are not intended to limit the present invention, and various changes and modifications can be made by those skilled in the art to the present invention. Any modifications, equivalent substitutions, improvements, etc. made within the spirit and principle of the present invention should be included in the protection scope of the present invention.

## Claims

1. A pet pee pad, **characterized by** comprising:
an impermeable layer (1);
an absorbent layer (2), wherein the absorbent layer (2) is connected to a side of the impermeable layer (1); and
an intercepting assembly, wherein the intercepting assembly is connected to a side of the absorbent layer (2) away from the impermeable layer (1).

2. The pet pee pad according to claim 1, **characterized in that**
the intercepting assembly comprises:
a plurality of intercepting members (3), wherein the plurality of intercepting members (3) are connected to the side of the absorbent layer (2) away from the impermeable layer (1), a head end and a tail end of each of the plurality of intercepting members (3) are connected, and the plurality of intercepting members (3) are concentrically arranged or eccentrically arranged.
